# FASCICULE DE BREVET EUROPEEN

(11) **EP 2 847 013 B1**
(45) Date de publication et mention de la délivrance du brevet: **29.06.2016**
(21) Numéro de dépôt: 13715377.1
(22) Date de dépôt: 26.03.2013
(51) Int. Cl.: B60H 1/00, F24F 11/00, F24F 11/02

(54) **DISPOSITIF DE COMMANDE DE LA POSITION D'UN VOLET D'ALIMENTATION EN AIR D'UNE INSTALLATION DE CHAUFFAGE/ CLIMATISATION EN FONCTION DE LA CAPACITÉ DE RÉFRIGÉRATION**
EINRICHTUNG ZUM REGELN DER STELLUNG EINER LUFTKLAPPE IN EINER WÄRME/KÜHLVORRICHTUNG IN ABHÄNGIGKEIT DER KÜHLUNGSKAPAZITÄT
APPARATUS FOR CONTROLLING THE AIR ADMISSION VALVE IN AN HVAC IN FUNCTION OF THE COOLING CAPACITY

(30) Priorité: 30.03.2012 FR 1252911
(43) Date de publication de la demande: 18.03.2015
(73) Titulaire: Peugeot Citroën Automobiles SA, 78140 Vélizy Villacoublay (FR)
(72) Inventeur: TROUILLARD, Arnaud, F-92170 Vanves (FR)
(86) Numéro de dépôt international: PCT/FR2013/050655
(87) Numéro de publication internationale: WO 2013/144501

(56) Documents cités:
- EP-A1- 0 568 445
- EP-A1- 0 780 253
- DE-C1- 19 917 502
- JP-A- 56 053 913
- JP-A- 61 102 306
- JP-A- 63 222 918

## Description

L'invention concerne les installations de chauffage/climatisation qui comprennent un volet d'alimentation destiné à les alimenter en air extérieur et/ou en air recyclé (ou recirculé).

On notera que l'invention concerne tout système comprenant au moins une enceinte devant être alimentée en air traité par une installation de chauffage/climatisation. Par conséquent, elle concerne au moins les véhicules, éventuellement de type automobile, et les bâtiments.

Comme le sait l'homme de l'art, certaines installations de chauffage/ climatisation comprennent un volet d'alimentation dont la position variable permet à chaque instant de contrôler les proportions d'air extérieur et d'air recyclé (ou recirculé) qui les alimentent. C'est notamment le cas de nombreux véhicules, éventuellement de type automobile.

On notera que l'on entend ici par « air recyclé (ou recirculé) » un air qui est extrait d'une enceinte alimentée en air traité par une installation de chauffage/climatisation.

L'utilisation du volet d'alimentation précité présente plusieurs avantages. Ainsi, lorsque le volet d'alimentation est placé dans une position de recyclage total qui ne laisse passer que de l'air recyclé, elle permet d'isoler l'enceinte (par exemple un habitacle) des odeurs extérieures et/ou de la pollution extérieure. De plus, elle permet d'optimiser les performances de refroidissement (ou de réfrigération) de l'installation (de chauffage/climatisation). En effet, plus la température de l'air, qui est fourni à l'installation par le volet d'alimentation, est basse, plus la température de l'air traité, fourni par l'installation à l'enceinte, peut être basse (on comprendra en effet qu'il est plus facile pour une installation de retraiter de l'air recyclé ayant une température de 25°C que de l'air extérieur ayart une température de 35 °C).

Actuellement, la position du volet d'alimentation (ou d'entrée d'air) est généralement gérée d'une manière que l'on peut qualifier de « statique ». En effet, cette position est fonction de paramètres qui sont quasi statiques du fait que leurs valeurs ne varient temporellement que très lentement, à savoir la température de l'air extérieur et la consigne de température dans l'enceinte (qui a été choisie par l'usager de l'installation). Plus la température extérieure est élevée, plus la proportion d'air recyclé, qui est imposée à l'installation, est élevée. De même, plus la consigne de température dans l'enceinte est basse, plus la proportion d'air recyclé, qui est imposée à l'installation, est élevée. En fait, la proportion d'air recyclé est fréquemment surdimensionnée dans la majorité des situations afin d'être juste suffisante dans les situations difficiles, comme par exemple lorsqu'un usager demande un important débit d'air traité ou lorsque l'installation a une capacité de réfrigération limitée car le régime de fonctionnement de son compresseur est contraint d'être faible du fait d'une capacité d'alimentation électrique réduite ou d'une vitesse d'entraînement faible.

Hélas, ce surdimensionnement de la proportion d'air recyclé induit au moins deux inconvénients. En effet, plus la proportion d'air recyclé est élevée, plus la qualité de l'air dans l'enceinte est dégradée (en particulier lorsque l'on est en recyclage total), et plus le niveau sonore de l'air traité diffusé dans l'enceinte est élevé (dans un climat chaud l'utilisation de 10% d'air recyclé induit une augmentation du niveau sonore de +3db et l'utilisation de 100% d'air recyclé induit une augmentation du niveau sonore de +6db à débit d'air traité constant, sachant qu'une augmentation de +3dB correspond à un doublement du niveau sonore).

JP-A-61102306 divulge un dispositif de commande correspondant au préambule de la revendication 1.

L'invention a donc pour but d'améliorer la situation.

Elle propose notamment à cet effet un dispositif, d'une part, destiné à commander la position d'un volet d'alimentation devant contrôler l'alimentation en air extérieur et/ou air recyclé d'une installation de chauffage/climatisation devant alimenter une enceinte en air traité, et, d'autre part, comprenant des premiers moyens de commande agencés pour déterminer chaque position du volet d'alimentation en fonction d'une consigne de température à l'intérieur de l'enceinte et d'une mesure de la température de l'air extérieur.

Ce dispositif de commande se caractérise par le fait que ses premiers moyens de commande sont agencés pour déterminer chaque position du volet d'alimentation en fonction, en outre, d'une estimation d'une capacité de moyens de réfrigération de l'installation à produire un air traité qui est adapté à la consigne.

Ainsi, on prend en compte à chaque instant non seulement la situation thermique externe à l'enceinte, en cours, mais également la capacité de l'installation à refroidir de l'air, ce qui permet d'optimiser la proportion d'air recyclé qui est utilisée.

L'invention est caractérisée en ce que
- ses premiers moyens de commande peuvent être agencés pour estimer la capacité en fonction d'une commande de fonctionnement d'un compresseur des moyens de réfrigération et de la différence entre une mesure de température de l'air traité en sortie d'un évaporateur de l'installation et une température cible, définissant une température théorique que devrait présenter l'air traité en sortie de cet évaporateur.

Le dispositif de commande selon l'invention peut comporter d'autres caractéristiques qui peuvent être prises séparément ou en combinaison, et notamment
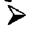 ses premiers moyens de commande peuvent être agencés, lorsque la commande de fonctionnement est comprise entre une commande de fonctionnement minimal et une commande de fonctionnement maximal, pour déterminer une position du volet d'alimentation qui est propre à diminuer la proportion d'air recyclé dans l'air qu'il doit fournir à l'installation ;
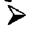 ses premiers moyens de commande peuvent être agencés, lorsque la commande de fonctionnement correspond à un fonctionnement maximal, soit pour déterminer une position du volet d'alimentation qui est propre à augmenter la proportion d'air recyclé dans l'air qu'il doit fournir à l'installation lorsque la température cible est inférieure à la mesure de température de l'air traité, soit pour maintenir la position en cours du volet d'alimentation lorsque la température cible est supérieure ou égale à la mesure de température de l'air traité ;
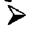 ses premiers moyens de commande peuvent comprendre i) un premier sous-module de commande agencé pour déterminer une pré-commande de position pour le volet d'alimentation en fonction de la consigne de température de l'enceinte choisie par l'usager, et de la mesure de température extérieure, ii) un premier module de combinaison agencé pour combiner la mesure de température de l'air traité avec la température cible, afin de délivrer un résultat représentatif d'un écart entre la température cible et la mesure de température de l'air traité, iii) un second sous-module de commande agencé pour déterminer une correction de commande de position pour le volet d'alimentation en fonction de la commande de fonctionnement et de cet écart, et iv) un second module de combinaison agencé pour combiner cette pré-commande avec cette correction de commande afin de délivrer une commande qui définit la prochaine position du volet d'alimentation ;
• il peut comprendre des seconds moyens de commande agencés pour déterminer la commande de fonctionnement du compresseur et la température cible que devrait présenter l'air traité en sortie de l'évaporateur en fonction au moins de la consigne de température de l'enceinte choisie par l'usager et de la mesure de température extérieure.

L'invention propose également un calculateur, destiné à équiper une installation de chauffage/climatisation devant alimenter une enceinte en air traité, et comprenant un dispositif de commande du type de celui présenté ci-avant.

L'invention propose également une installation de chauffage/ climatisation comprenant un calculateur du type de celui présenté ci-avant.

L'invention propose également un véhicule, éventuellement de type automobile, et comprenant une installation de chauffage/climatisation du type de celle présentée ci-avant.

D'autres caractéristiques et avantages de l'invention apparaîtront à l'examen de la description détaillée ci-après, et des dessins annexés, sur lesquels:
- la figure 1 illustre schématiquement une installation de chauffage/ climatisation de véhicule automobile couplée à un calculateur comportant un exemple de réalisation d'un dispositif de commande selon l'invention, et
- la figure 2 illustre schématiquement et fonctionnellement le dispositif de commande de la figure 1.

L'invention a pour but de proposer un dispositif de commande D destiné à équiper une installation de chauffage/climatisation IC d'un système.

Dans ce qui suit, on considère, à titre d'exemple non limitatif, que l'installation de chauffage/climatisation IC fait partie d'un véhicule automobile, comme par exemple une voiture. L'enceinte climatisée du véhicule est donc son habitacle. Mais l'invention n'est pas limitée à ce type de système. Elle concerne en effet tout type de véhicule terrestre, maritime (ou fluvial), ou aérien, et tout type de bâtiment, dès lors qu'il comprend au moins une enceinte destinée à être alimentée en air traité par une installation de chauffage/climatisation.

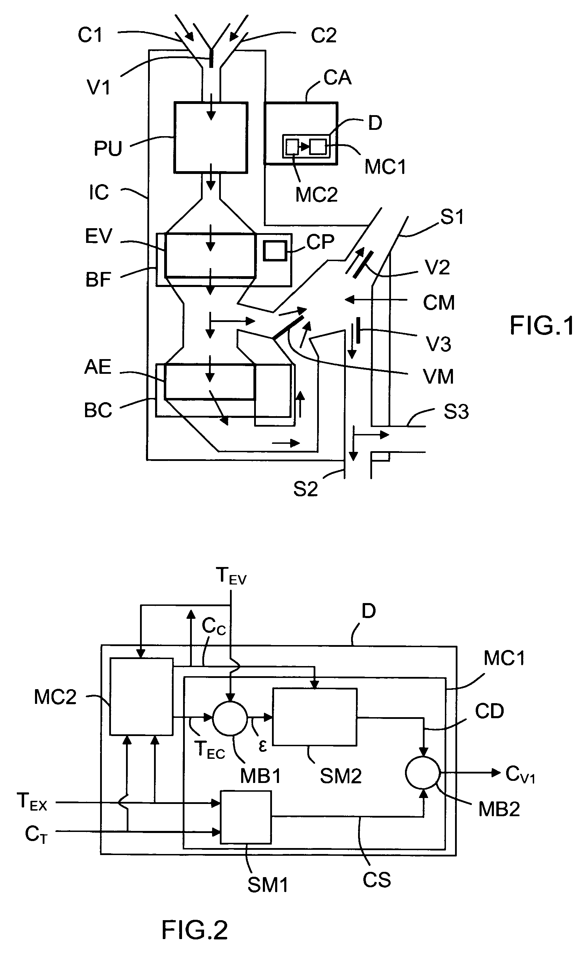

On a schématiquement et fonctionnellement représenté sur la figure 1 une installation de chauffage/climatisation IC, ici de véhicule.

Comme illustré, cette installation (de chauffage/climatisation) IC comprend au moins un pulseur (ou groupe moto-ventilateur (ou GMV)) PU, une boucle froide (ou boucle de climatisation) BF, une boucle chaude (ou boucle de chauffage) BC, un volet d'alimentation V1, et un volet de mixage VM.

Le pulseur PU est alimenté en air extérieur et/ou en air recyclé (ou recirculé) par le volet d'alimentation (ou d'entrée d'air) V1. L'air extérieur est issu d'un premier conduit C1 et l'air recyclé est issu de l'habitacle via un second conduit C2. Le débit d'air fourni par le pulseur PU dépend du niveau de puissance qui a été choisi par un passager du véhicule au moyen d'un organe de commande installé dans l'habitacle, généralement dans la planche de bord.

La position du volet d'alimentation V1, et donc les répartitions d'air extérieur et d'air recyclé, est/sont contrôlé(e)s par un dispositif de commande D sur lequel on reviendra plus loin.

La boucle froide BF est alimentée en air par le pulseur PU. Elle comporte par exemple un évaporateur EV (traversé par l'air issu du pulseur PU), un compresseur CP, un condenseur et un circuit dans lequel circule un fluide frigorigène et qui est couplé à l'évaporateur EV, au compresseur CP et au condenseur.

Il est rappelé que ce fluide frigorigène circule en circuit fermé dans le circuit dans différentes phases. Ce fluide frigorigène est, par exemple, un HFC (ou un autre réfrigérant fluoré) ou du dioxyde de carbone.

La sortie de l'évaporateur EV est couplée à un conduit qui alimente, d'une part, une chambre de mixage CM dans laquelle est implanté le volet de mixage VM, et, d'autre part, la boucle chaude BC.

La boucle chaude BC est destinée à chauffer l'air qui est issu de l'évaporateur EV et qui est destiné à l'habitacle du véhicule. Elle comprend un dispositif de chauffage AE comportant, par exemple, un aérotherme, comme par exemple un échangeur de chaleur (dans lequel circule un liquide qui est éventuellement chauffé par des résistances électriques de chauffage (par exemple de type CTP haute tension)), et/ou un radiateur électrique, par exemple constitué de résistances électriques de chauffage (par exemple de type CTP haute tension).

Le dispositif de chauffage AE est chargé, lorsqu'il fonctionne, de réchauffer l'air qui le traverse et qui est issu de l'évaporateur EV. Il délivre l'air qui le traverse dans un conduit qui débouche dans la chambre de mixage CM, par exemple.

La chambre de mixage CM est également connectée à des conduits qui sont, ici, destinés à alimenter des sorties de dégivrage et d'aération S1 placées dans l'habitacle du véhicule, des sorties pieds avant S2 et des sorties pieds arrière S3 également placées dans l'habitacle du véhicule. L'accès à ces conduits est contrôlé par des volets d'admission V2 et V3.

Les positions respectives des volets d'admission V2 et V3 dépendent des sorties d'air au niveau desquelles un passager du véhicule souhaite que l'air traité, issu de l'installation IC, soit délivré. Ces sorties d'air peuvent être choisies par le passager au moyen d'un organe de commande installé dans l'habitacle, généralement dans la planche de bord.

Le volet de mixage VM est destiné à mélanger (ou mixer) de façon contrôlée une partie de l'air qui a traversé la boucle froide BF et l'air qui a traversé la boucle chaude BC. Sa position dépend du mode de fonctionnement de l'installation IC qui a été choisi par un passager du véhicule au moyen d'un organe de commande installé dans l'habitacle, généralement dans la planche de bord.

Le fonctionnement de l'installation IC, et en particulier de son pulseur PU, de ses boucles froide BF et chaude BC, de son volet de mixage VM et de ses volets d'admission V2 et V3, est contrôlé par un calculateur CA.

On notera que l'installation IC pourrait présenter une architecture sensiblement différente, notamment lorsqu'elle fonctionne en tant que pompe à chaleur réversible.

Dans l'exemple non limitatif illustré sur la figure 1, le dispositif de commande D fait partie du calculateur CA. Mais cela n'est pas obligatoire. Il pourrait en effet s'agir d'un équipement qui est couplé au calculateur CA, directement ou indirectement. Par conséquent, le dispositif de commande D peut être réalisé sous la forme de modules logiciels (ou informatiques ou encore « software »), ou bien d'une combinaison de circuits électroniques (ou « hardware ») et de modules logiciels.

Comme illustré sur les figures 1 et 2, un dispositif de commande D, selon l'invention, comprend au moins des premiers moyens de commande MC1 agencés pour déterminer chaque position du volet d'alimentation V1 en fonction d'une consigne C_{T} définissant la température désirée à l'intérieur de l'enceinte (ici un habitacle), d'une mesure T_{EX} de la température de l'air extérieur, et d'une estimation d'une capacité de moyens de réfrigération CP de la boucle froide BF (de l'installation IC)) à produire un air traité qui est adapté à cette consigne C_{T}.

La consigne C_{T} est choisie par un passager du véhicule au moyen d'un organe de commande installé dans l'habitacle, généralement dans la planche de bord. Par ailleurs, la mesure T_{EX} est par exemple effectuée par un premier capteur de température qui est installé dans un endroit choisi du compartiment moteur ou sur un élément extérieur du véhicule comme par exemple les rétroviseurs, éloigné des sources de production de calories, et fournie au dispositif de commande D par le calculateur CA.

Par exemple, les premiers moyens de commande MC1 peuvent être agencés pour estimer la capacité des moyens de réfrigération en fonction d'une commande de fonctionnement C_{C} du compresseur CP et d'une différence entre une mesure T_{EV} de la température que présente l'air traité en sortie de l'évaporateur EV et une température cible T_{EC} qui définit une température théorique que devrait présenter l'air traité en sortie de cet évaporateur EV.

La mesure T_{EV} est effectuée par un second capteur de température qui est installé en sortie de l'évaporateur EV, et fournie au dispositif de commande D par le calculateur CA. La sortie de l'évaporateur EV est en effet un endroit qui est bien adapté aux mesures représentatives de la température de l'installation IC lorsque cette dernière (IC) fonctionne en mode de réfrigération (ou climatisation). L'objectif est ici de comparer directement la température de l'air traité T_{EV} mesurée en sortie évaporateur EV à la température cible T_{EC} de l'air traité en sortie de ce même évaporateur EV. On notera que la température cible de l'air traité T_{EC} en sortie de l'évaporateur EV peut être elle-même construite, notamment, à partir de la température cible de l'air traité devant être injecté dans l'habitacle.

La commande de fonctionnement C_{C} du compresseur CP est déterminée par des seconds moyens de commande MC2 qui, comme illustré non limitativement sur les figures 1 et 2, peut faire partie du dispositif de commande D. On notera que dans une variante de réalisation non représentée les seconds moyens de commande MC2 pourraient faire partie du calculateur CA tout en étant externes au dispositif de commande D, ou bien d'un autre calculateur.

Par exemple, ces seconds moyens de commande MC2 peuvent être agencés de manière à déterminer la commande de fonctionnement C_{C} en fonction au moins de la consigne C_{T} choisie et de la mesure de la température extérieure T_{EX}. De préférence, et comme illustré sur la figure 2, cette détermination se fait également en fonction de la mesure de température T_{EV} que présente l'air traité en sortie de l'évaporateur EV. Cette commande de fonctionnement C_{C} définit une cylindrée de fonctionnement du compresseur CP qui est compris entre une cylindrée minimale (par exemple nulle) correspondant à une commande de fonctionnement minimal et une cylindrée maximale correspondant à une commande de fonctionnement maximal.

Lorsque la commande de fonctionnement C_{C} est « comprise » entre les commande de fonctionnement minimal et commande de fonctionnement maximal, les premiers moyens de commande MC1 peuvent être agencés pour déterminer une nouvelle position du volet d'alimentation V1 propre à diminuer la proportion d'air recyclé dans l'air qu'il doit fournir à l'installation IC.

On comprendra que cette diminution se fait par rapport à la proportion d'air recyclé correspondant à la dernière position déterminée et donc en cours.

On comprendra également que dans ce cas le compresseur CP ne fonctionne pas à un régime maximum et donc que le potentiel de refroidissement de l'installation IC n'est pas utilisé à son maximum. Par conséquent, on peut diminuer, de préférence progressivement, la proportion d'air recyclé qui alimente le pulseur PU, ce qui provoquera un nouveau calcul de la commande de fonctionnement C_{C} du compresseur CP par les seconds moyens de commande MC2. Cette nouvelle commande de fonctionnement C_{C} correspond alors à un régime du compresseur CP supérieur à son précédent régime (en cours).

Lorsque la commande de fonctionnement C_{C} correspond à un fonctionnement maximal, deux situations peuvent survenir.

Une première situation survient lorsque la température cible T_{EC} est inférieure à la mesure de température de l'air traité T_{EV}. Dans ce cas, les premiers moyens de commande MC1 peuvent être agencés pour déterminer une nouvelle position du volet d'alimentation V1 propre à augmenter la proportion d'air recyclé dans l'air qu'il doit fournir à l'installation IC. On comprendra en effet que dans cette première situation l'installation IC n'a pas la capacité d'augmenter sa production de froid, et donc les premiers moyens de commande MC1 sont contraints d'augmenter la proportion d'air recyclé qui alimente le pulseur PU afin de faciliter le travail de la boucle froide BF et ainsi permettre à la température régnant dans l'habitacle de converger plus facilement vers la consigne C_{T}.

Une seconde situation survient lorsque la température cible T_{EC} est supérieure ou égale à la mesure de température de l'air traité T_{EV}. Dans ce cas, les premiers moyens de commande MC1 peuvent être agencés pour maintenir la position en cours du volet d'alimentation V1. On comprendra en effet que dans cette seconde situation le dispositif D a réussi à faire converger la température T_{EV} de l'air traité en sortie de l'évaporateur EV vers la température cible T_{EC,} et donc qu'à terme l'installation IC réussira à faire converger la température régnant dans l'habitacle vers la consigne C_{T}.

Comme illustré sur la figure 2, les seconds moyens de commande MC2 peuvent être également agencés pour déterminer la température cible T_{EC} en fonction au moins de la consigne C_{T} choisie et de la mesure de la température extérieure T_{EX}. Par exemple, cette température cible T_{EC} en sortie de l'évaporateur EV est fonction de la température théorique de l'air traité qui doit être injecté dans l'habitacle, laquelle est fonction de la consigne C_{T} choisie, de la mesure de la température extérieure T_{EX}, et de la mesure (ou de l'estimation) de la température à l'intérieur de l'habitacle.

Afin que les premiers moyens de commande MC1 puissent fonctionner comme indiqué ci-dessus, ils peuvent être réalisés comme illustré sur la figure 2. Plus précisément, dans cet exemple de réalisation les premiers moyens de commande MC1 comprennent des premier SM1 et second SM2 sous-modules de commande et des premier MB1 et second MB2 modules de combinaison.

Le premier sous-module de commande SM1 est par exemple chargé de déterminer une pré-commande CS (ou « commande statique ») de position du volet d'alimentation V1 simplement en fonction de la consigne C_{T} et de la mesure de la température extérieure T_{EX}. Pour ce faire, le premier sous-module de commande SM1 peut, par exemple, utiliser une table de correspondance établissant une correspondance entre des couples (C_{T}, T_{EX}) et des pré-commandes CS.

Le premier module de combinaison MB1 est par exemple chargé de combiner la mesure T_{EV} avec une température cible T_{EC} définissant la température théorique que devrait présenter l'air traité en sortie de l'évaporateur EV.

Par exemple, le premier module de combinaison MB1 peut effectuer la soustraction entre la température cible T_{EC} et la mesure T_{EV} afin de délivrer un résultat ε qui est représentatif de l'écart entre la température cible T_{EC} et la mesure T_{EV} (soit ε = T_{EC} - T_{EV}).

Le second sous-module de commande SM2 est par exemple chargé de déterminer une correction de commande CP (ou « commande dynamique ») de position du volet d'alimentation V1 en fonction de la commande de fonctionnement C_{C} et de l'écart ε. Pour ce faire, le second sous-module de commande SM2 peut, par exemple, utiliser un régulateur de type PID (« Proportionnel Intégrateur Dérivateur ») avec anti-saturation ayant pour entrée soit l'écart ε si la commande de fonctionnement C_{C} est maximale, soit une valeur fixe donnée si la commande de fonctionnement C_{C} est inférieure à la commande maximale. La sortie de ce régulateur pourra ensuite être convertie, via une table de correspondance en un résultat qui donnera la correction de commande CP de position du volet d'alimentation V1.

Le second module de combinaison MB2 est par exemple chargé de combiner la pré-commande (ou commande statique) CS avec la correction de commande (ou commande dynamique) CP afin de délivrer une commande C_{V1} définissant la prochaine position du volet d'alimentation V1.

Par exemple, le second module de combinaison MB2 peut effectuer la somme de la pré-commande (ou commande statique) CS et de la correction de commande (ou commande dynamique) CP afin de délivrer la commande C_{V1} (soit C_{V1} = CS + CP).

Ce mode de fonctionnement permet avantageusement de calibrer la commande statique sur une faible proportion d'air recyclé afin de minimiser l'impact sur le niveau sonore (ou acoustique)), et de corriger cette commande statique (de recyclage) au moyen de la commande dynamique lorsque cela s'avère nécessaire, afin que l'installation IC puisse assurer à chaque instant la production de froid qui est adaptée à la situation thermique en cours (C_{T}, T_{EX}).

## Revendications

1. Dispositif (D) de commande de la position d'un volet d'alimentation (V1) destiné à contrôler l'alimentation en air extérieur et/ou air recyclé d'une installation de chauffage/climatisation (IC) devant alimenter une enceinte en air traité, ledit dispositif (D) comprenant des premiers moyens de commande (MC1) agencés pour déterminer chaque position dudit volet d'alimentation (V1) en fonction d'une consigne de température à l'intérieur de ladite enceinte et d'une mesure de la température dudit air extérieur, dans lequel lesdits premiers moyens de commande (MC1) sont agencés pour déterminer chaque position dudit volet d'alimentation (V1) en fonction, en outre, d'une estimation d'une capacité de moyens de réfrigération (CP) de ladite installation (IC) à produire un air traité adapté à ladite consigne, ledit dispositif étant **caractérisé en ce que** lesdits premiers moyens de commande (MC1) sont agencés pour estimer ladite capacité en fonction d'une commande de fonctionnement d'un compresseur (CP) desdits moyens de réfrigération (CP) et d'une différence entre une mesure de température dudit air traité en sortie d'un évaporateur (EV) de ladite installation (IC) et une température cible, définissant une température théorique que devrait présenter l'air traité en sortie dudit évaporateur (EV).

2. Dispositif selon la revendication 1, **caractérisé en ce que** lesdits premiers moyens de commande (MC1) sont agencés, lorsque ladite commande de fonctionnement est comprise entre une commande de fonctionnement minimal et une commande de fonctionnement maximal, pour déterminer une position dudit volet d'alimentation (V1) propre à diminuer la proportion d'air recyclé dans l'air qu'il doit fournir à ladite installation (IC).

3. Dispositif selon l'une des revendications 1 ou 2, **caractérisé en ce que** lesdits premiers moyens de commande (MC1) sont agencés, lorsque ladite commande de fonctionnement correspond à un fonctionnement maximal, soit pour déterminer une position dudit volet d'alimentation (V1) propre à augmenter la proportion d'air recyclé dans l'air qu'il doit fournir à ladite installation (IC) lorsque ladite température cible est inférieure à ladite mesure de température de l'air traité, soit pour maintenir la position en cours dudit volet d'alimentation (V1) lorsque ladite température cible est supérieure ou égale à ladite mesure de température de l'air traité.

4. Dispositif selon l'une des revendications 1 à 3, **caractérisé en ce que** lesdits premiers moyens de commande (MC1) comprennent i) un premier sous-module de commande (SM1) agencé pour déterminer une pré-commande de position pour ledit volet d'alimentation (V1) en fonction de ladite consigne et de ladite mesure de température extérieure, ii) un premier module de combinaison (MB1) agencé pour combiner ladite mesure de température de l'air traité avec ladite température cible, afin de délivrer un résultat représentatif d'un écart entre ladite température cible et ladite mesure de température de l'air traité, iii) un second sous-module de commande (SM2) agencé pour déterminer une correction de commande de position pour ledit volet d'alimentation (V1) en fonction de ladite commande de fonctionnement et dudit écart, et iv) un second module de combinaison (MB2) agencé pour combiner ladite pré-commande avec ladite correction de commande afin de délivrer une commande définissant la prochaine position dudit volet d'alimentation (V1).

5. Dispositif selon la revendication 4, **caractérisé en ce qu'**il comprend des seconds moyens de commande (MC2) agencés pour déterminer ladite commande de fonctionnement et ladite température cible en fonction au moins de ladite consigne et de ladite mesure de la température extérieure.

6. Calculateur (CA) pour une installation de chauffage/climatisation (IC) devant alimenter une enceinte en air traité, **caractérisé en ce qu'**il comprend un dispositif de commande (D) selon l'une des revendications précédentes.

7. Installation de chauffage/climatisation (IC), **caractérisée en ce qu'**elle comprend un calculateur (CA) selon la revendication 6.

8. Véhicule, **caractérisé en ce qu'**il comprend une installation de chauffage/climatisation (IC) selon la revendication 7.

9. Véhicule selon la revendication 8, **caractérisé en ce qu'**il est de type automobile.

## Patentansprüche

1. Vorrichtung (D) zum Steuern der Position einer Einlassklappe (V1), die dazu bestimmt ist, die Zuführung von Außenluft und/ oder Umluft einer Heizanlage/Klimaanlage (IC) zu steuern, die einen abgeschlossenen Raum mit behandelter Luft versorgen soll, wobei die besagte Vorrichtung (D) erste Steuermittel (MC1) umfasst, die ausgeführt sind, um jede Position der besagten Einlassklappe (V1) in Abhängigkeit von einem Temperatursollwert im Inneren des besagten abgeschlossenen Raumes und einem Temperaturmesswert der besagten Außenluft zu bestimmen, wobei die besagten ersten Steuermittel (MC1) ausgeführt sind, um jede Position der besagten Einlassklappe (V1) darüber hinaus in Abhängigkeit von einer Einschätzung einer Kühlmittelkapazität (CP) der besagten Anlage (IC) zum Erzeugen einer behandelten Luft zu bestimmen, die sich für den besagten Sollwert eignet, wobei die besagte Vorrichtung **dadurch gekennzeichnet ist, dass** die besagten ersten Steuermittel (MC1) ausgeführt sind, um die besagte Kapazität in Abhängigkeit von einer Betriebssteuerung für einen Kompressor (CP) der besagten Kühlmittel (CP) und einem Unterschied zwischen einem Temperaturmesswert der besagten behandelten Luft am Ausgang eines Verdampfers (EV) der besagten Anlage (IC) und einer Zieltemperatur einzuschätzen, zur Definition einer theoretischen Temperatur, welche die behandelte Luft am Ausgang des besagten Verdampfers (EV) aufweisen sollte.

2. Vorrichtung nach Anspruch 1, **dadurch gekennzeichnet, dass** die besagten ersten Steuermittel (MC1) ausgeführt sind, um, wenn die besagte Betriebssteuerung zwischen einer minimalen Betriebssteuerung und einer maximalen Betriebssteuerung enthalten ist, eine Position der besagten Einlassklappe (V1) zu bestimmen, die sich dazu eignet, den Anteil an Umluft in der Luft zu verringern, die sie in die besagte Anlage (IC) einzubringen hat.

3. Vorrichtung nach einem der Ansprüche 1 oder 2, **dadurch gekennzeichnet, dass** die besagten ersten Steuermittel (MC1) ausgeführt sind, wenn die besagte Betriebssteuerung einem maximalen Betrieb entspricht, um entweder eine Position der besagten Einlassklappe (V1) zu bestimmen, die sich dazu eignet, den Anteil an Umluft in der Luft zu erhöhen, die sie in die besagte Anlage (IC) einzubringen hat, wenn die besagte Zieltemperatur unter dem besagten Temperaturmesswert der behandelten Luft liegt, oder um die aktuelle Position der besagten Einlassklappe (V1) beizubehalten, wenn die besagte Zieltemperatur größer oder gleich dem besagten Temperaturmesswert der behandelten Luft liegt.

4. Vorrichtung nach einem der Ansprüche 1 bis 3, **dadurch gekennzeichnet, dass** die besagten ersten Steuermittel (MC1) i) ein erstes Steuer-Untermodul (SM1) umfassen, das ausgeführt ist, um eine Positionsvorsteuerung für die besagte Einlassklappe (V1) in Abhängigkeit vom besagten Sollwert und dem besagten Außentemperaturmesswert zu bestimmen, ii) ein erstes Kombinationsmodul (MB1), das ausgeführt ist, um den besagten Temperaturmesswert der behandelten Luft mit der besagten Zieltemperatur zu kombinieren, um ein repräsentatives Ergebnis für eine Abweichung zwischen der besagten Zieltemperatur und dem besagten Temperaturmesswert der behandelten Luft zu liefern, iii) ein zweites Steuer-Untermodul (SM2), das ausgeführt ist, um eine Positionssteuerungskorrektur für die besagte Einlassklappe (V1) in Abhängigkeit von der besagten Betriebssteuerung und der besagten Abweichung zu bestimmen, und iv) ein zweites Kombinationsmodul (MB2), das ausgeführt ist, um die besagte Vorsteuerung mit der besagten Steuerungskorrektur zu kombinieren, um eine Steuerung zu liefern, welche die nächste Position der besagten Einlassklappe (V1) definiert.

5. Vorrichtung nach Anspruch 4, **dadurch gekennzeichnet, dass** sie zweite Steuermittel (MC2) umfasst, die ausgeführt sind, um die besagte Betriebssteuerung und die besagte Zieltemperatur zumindest in Abhängigkeit vom besagten Sollwert und dem besagten Außentemperaturmesswert zu bestimmen.

6. Rechner (CA) für eine Heizanlage/Klimaanlage (IC), die einen abgeschlossenen Raum mit behandelter Luft versorgen soll, **dadurch gekennzeichnet, dass** er eine Steuervorrichtung (D) nach einem der vorherigen Ansprüche umfasst.

7. Heizanlage/Klimaanlage (IC), **dadurch gekennzeichnet, dass** sie einen Rechner (CA) nach Anspruch 6 umfasst.

8. Fahrzeug, **dadurch gekennzeichnet, dass** es eine Heizanlage/Klimaanlage (IC) nach Anspruch 7 umfasst.

9. Fahrzeug nach Anspruch 8, **dadurch gekennzeichnet, dass** es ein Kraftfahrzeug ist.

## Claims

1. Device (D) for controlling the position of a supply flap (V1) intended to control the supply of external air and/or recycled air of a heating/air conditioning installation (IC) that is to supply an enclosure with treated air, said device (D) comprising first control means (MC1) arranged to determine each position of said supply flap (V1) according to a temperature set point inside said enclosure and a measurement of the temperature of said external air, in which said first control means (MC1) are arranged so as to determine each position of said supply flap (V1) also according to an estimation of an ability of refrigeration means (CP) of said installation (IC) to produce treated air suited to said set point, said device being **characterised in that** said first control means (MC1) are arranged to estimate said ability according to a command for the functioning of a compressor (CP) of said refrigeration means (CP) and a difference between a measurement of temperature of said treated air discharged from an evaporator (EV) of said installation (IC) and a target temperature, defining a theoretical temperature that the treated air should have at the discharge from said evaporator (EV).

2. Device according to claim 1, **characterised in that** said first control means (MC1) are arranged, when said functioning command is between a minimum functioning command and a maximum functioning command, to determine a position of said supply flap (V1) able to reduce the proportion of recycled air in the air that it is to supply to said installation (IC).

3. Device according to one of claims 1 or 2, **characterised in that** said first control means (MC1) are arranged, when said functioning command corresponds to a maximum functioning, either to determine a position of said supply flap (V1) able to increase the proportion of recycled air in the air that it is to supply to said installation (IC) when said target temperature is below said measurement of the treated air, or to maintain the current position of said supply flap (V1) when said target temperature is greater than or equal to said measurement of temperature of the treated air.

4. Device according to one of claims 1 to 3, **characterised in that** said first control means (MC1) comprise i) a first control sub-module (SM1) arranged to determine a position pre-command for said supply flap (V1) according to said set point and said external temperature measurement, ii) a first combination module (MB1) arranged to combine said measurement of temperature of the treated air with said target temperature, in order to deliver a result representing a difference between said target temperature and said measurement of temperature of the treated air, iii) a second control sub-module (SM2) arranged to determine a correction to the position command for said supply flap (V1) according to said functioning command and said difference, and iv) a second combination module (MB2) arranged to combine said pre-command with said command correction in order to deliver a command defining the next position of said supply flap (V1).

5. Device according to claim 4, **characterised in that** it comprises second control means (MC2) arranged to determine said functioning command and said target temperature according to at least said set point and said measurement of the external temperature.

6. Computer (CA) for a heating/air conditioning installation (IC) that is to supply an enclosure with treated air, **characterised in that** it comprises a control device (D) according to one of the preceding claims.

7. Heating/air conditioning installation (IC), **characterised in that** it comprises a computer (CA) according to claim 6.

8. Vehicle, **characterised in that** it comprises a heating/air conditioning installation(IC) according to claim 7.

9. Vehicle according to claim 8, **characterised in that** it is of the motor car type.
